# EUROPÄISCHE PATENTSCHRIFT

(11) **EP 1 904 255 B1**
(45) Veröffentlichungstag und Bekanntmachung des Hinweises auf die Patenterteilung: **23.12.2009**
(21) Anmeldenummer: 06762565.7
(22) Anmeldetag: 13.07.2006
(51) Int. Cl.: B23B 29/034, B23B 27/14

(54) **WERKZEUG ZUR SPANENDEN BEARBEITUNG VON BOHRUNGEN**
TOOL FOR MACHINING BOREHOLES
OUTIL SERVANT A L'USINAGE D'ALESAGES PAR ENLEVEMENT DE COPEAUX

(30) Priorität: 13.07.2005 DE 102005034430
(43) Veröffentlichungstag der Anmeldung: 02.04.2008
(73) Patentinhaber: MAPAL Fabrik für Präzisionswerkzeuge Dr. Kress KG, D-73431 Aalen (DE)
(72) Erfinder: HÄBERLE, Friedrich, 73466 Lauchheim (DE); KRESS, Dieter, 73431 Aalen (DE)
(74) Vertreter: Gleiss, Alf-Olav
(86) Internationale Anmeldenummer: PCT/EP2006/006869
(87) Internationale Veröffentlichungsnummer: WO 2007/006575

(56) Entgegenhaltungen:
- DE-A1- 2 108 619
- DE-A1- 3 316 380
- DE-U1- 8 230 997
- GB-A- 183 252

## Beschreibung

Die Erfindung betrifft ein Werkzeug zur spanenden Bearbeitung von Bohrungen gemäß Oberbegriff des Anspruchs 1. Ein solches Werkzeug ist aus der Offenlegungsschrift DE 2 108 619 bekannt.

Werkzeuge der hier angesprochenen Art werden auch als Zerspanungswerkzeuge bezeichnet. Sie dienen dazu, Späne von Bohrungsoberflächen abzutragen. Bei einem bekannten Werkzeug dieser Art (DE 82 30 997) sind mehrere Schneidplatten vorgesehen, die geometrisch definierte Schneiden aufweisen. Diese tragen bei Einsatz des Werkzeugs Späne von einer Bohrungswand ab. Nach dem Einsetzen der Schneidplatten in das Werkzeug werden diese geschliffen, sodass sich an die geometrisch definierten Schneiden, insbesondere an die Nebenschneiden, eine so genannte Rundschlifffase anschließt, also ein Stützbereich, der unter einem Radius gewölbt ist, der dem Radius der zu bearbeitenden Bohrung entspricht. Die Stützflächen grenzen unmittelbar an die Schneiden an und eilen diesen, in Drehrichtung des Werkzeugs gesehen, nach. Die als Rundschlifffase ausgebildeten Stützbereiche haben die Aufgabe, das Werkzeug in der Bohrung zu führen und zu stabilisieren, sodass Schwingungen, die zu schlechten Oberflächengüten und reduzierten Standzeiten des Werkzeugs führen, vermieden werden. Außerdem wird die Oberfläche der bearbeiteten Bohrung durch die Stützflächen geglättet.

Nachteil der derartig ausgebildeten Werkzeuge ist, dass für verschiedene Bohrungsdurchmesser Werkzeuge mit verschiedenen Rundschlifffasen bereitgestellt werden müssen. Bei Werkzeugen mit festen Schneiden ist dies zwangsläufig der Fall. Bei Werkzeugen mit austauschbaren Schneidplatten bedeutet dies, dass es nicht möglich ist, ein und dieselbe auswechselbare Schneidplatte, also eine Platte mit demselben Radius an der Rundschlifffase, für einen bestimmten Durchmesserbereich von verschiedenen Werkzeugen zu verwenden. Dadurch ist die Herstellung der Schneidplatten aufwendig und teuer.

Aufgabe der Erfindung ist es daher, ein Werkzeug zu schaffen, das diesen Nachteil nicht aufweist.

Zur Lösung dieser Aufgabe wird ein Werkzeug vorgeschlagen, das die in Anspruch 1 genannten Merkmale aufweist. Es weist einen Grundkörper mit einer Schneideinrichtung auf, die wenigstens eine Schneidplatte mit mindestens einer geometrisch definierten Schneide umfasst. Diese ist, anders als bei herkömmlichen Werkzeugen, nicht in die Umfangsfläche des Werkzeugs eingesetzt, sondern in dessen Stirnseite. Sie ist dort tangential befestigt, vorzugsweise in diese eingelassen. Das Werkzeug weist mindestens eine Führungsfläche zur Führung in der bearbeiteten Bohrung auf. Es zeichnet sich dadurch aus, dass die mindestens eine Schneidplatte mit einem Bogenschliff versehen ist, durch den eine an die Schneide der Schneidplatte angrenzende Stützfläche geschaffen wird. Dabei ist diese Stützfläche unter einem Radius gewölbt, der kleiner ist als der Radius der zu bearbeitenden Bohrung. Die Stützfläche ist so angeordnet, dass der unmittelbar an die Schneide angrenzende Bereich an der zu bearbeitenden Bohrungswand anliegt. Der in Umfangsrichtung des Werkzeugs gesehen in einem Abstand zur Schneide liegende Endbereich der Stützfläche ist in einem Abstand zur Bohrung angeordnet. Es bildet sich also ein keilförmiger Spalt zwischen der mit dem Bogenschliff versehenen Stützfläche und der Bohrungswand aus, der sich mit zunehmendem Abstand zur Schneide öffnet. Das Werkzeug wird also in der zu bearbeitenden Bohrung durch diese Stützfläche außerdem durch mindestens eine Führungsfläche geführt.

Ein bevorzugtes Ausführungsbeispiel des Werkzeugs zeichnet sich dadurch aus, dass die mindestens eine Führungsfläche durch eine Führungsleiste oder aber durch eine weitere Schneidplatte gebildet wird, die ebenfalls mit einem Bogenschliff der oben beschriebenen Art versehen ist und damit eine Stützfläche aufweist, die das Werkzeug in der Bohrung führt, also als Führungsfläche dient.

Besonders bevorzugt wird ein Ausführungsbeispiel des Werkzeugs, das eine Schneidplatte mit einem Bogenschliff der oben beschriebenen Art aufweist, außerdem zwei Führungsleisten mit Führungsflächen oder aber eine Schneidplatte mit einem Bogenschliff der oben beschriebenen Art und zwei weiteren Schneidplatten, die ebenfalls einen Bogenschliff aufweisen, also eine Stützfläche, die als Führungsfläche dient. Bei Einsatz eines derartigen Werkzeugs liegt der unmittelbar an die Schneide angrenzende Bereich der Stützfläche an der zu bearbeitenden Bohrungswand an. Ein in einem Abstand zur Schneide liegenden Endbereich der Stützfläche, an den sich eine abfallende Freifläche anschließt, liegt in einem Abstand zur Bohrungswand. Es ergibt sich also - entgegengesetzt zur Drehrichtung des Werkzeugs gesehen - ein sich ausgehend von der Schneide verbreiternder Spalt.

Es hat sich bei Werkzeugen der hier genannten Art gezeigt, dass sich bei einer derartigen Ausgestaltung, also bei Einsatz eines Bogenschliffs, nicht nur Bohrungen mit einem bestimmten Durchmesser bearbeitet werden können. Es ist vielmehr möglich, ein und dieselbe Schneidplatte für Bohrungen unterschiedlichen Durchmessers einzusetzen. Damit ist es nicht mehr erforderlich, für Bohrungen mit verschiedenen Durchmessern Schneidplatten zu verwenden, deren Stützbereich jeweils an den Durchmesser der zu bearbeitenden Bohrung exakt angepasst ist. Vielmehr ist es möglich, dieselbe auswechselbare Schneidplatte mit einem bestimmten Radius im Bereich der Stützfläche für einen definierten Durchmesserbereich von verschiedenen Werkzeugen zu verwenden.

Bei einem erfindungsgemäßen Werkzeug ist vorgesehen, dass der Abstand zwischen dem Endbereich der Stützfläche und der Wand der bearbeiteten Bohrung circa 0,02 mm bis 0,001 mm, insbesondere 0,01 mm bis 0,003 mm beträgt. Vorzugsweise ist die Stützfläche so ausgebildet, dass der Abstand am Übergang der Stützfläche zur Freifläche gegenüber der Bohrungswand nicht mehr als 0,005 mm beträgt.

Weitere Ausgestaltungen des Werkzeugs ergeben sich aus den Unteransprüchen.

Die Erfindung wird im Folgenden anhand der Zeichnungen näher erläutert. Es zeigen:
- Figur 1: eine perspektivische Vorderansicht eines ersten Ausfüh- rungsbeispiels eines Werkzeugs;
- Figur 2: eine Schneidplatte des Werkzeugs gemäß Figur 1 in per- spektivischer Vorderansicht;
- Figur 3: eine Prinzipskizze eines Teils einer Stützfläche der Schneidplatte gemäß Figur 2;
- Figur 4: eine Schneidplatte des Werkzeugs gemäß Figur 1 von schräg vorne;
- Figur 5: eine Durchsicht auf eine Schneidplatte des Werkzeugs gemäß Figur 1;
- Figur 6: eine perspektivische Ansicht einer Schneidplatte des Werkzeugs gemäß Figur 1 von schräg unten;
- Figur 7: eine perspektivische Vorderansicht eines zweiten Ausfüh- rungsbeispiels eines Werkzeugs;
- Figur 8: eine perspektivische Vorderansicht einer Schneidptatte des Werkzeugs gemäß Figur 2;
- Figur 9: eine perspektivische Unteransicht einer Schneidplatte des Werkzeugs gemäß Figur 2;
- Figur 10: eine perspektivische Vorderansicht eines dritten Ausfüh- rungsbeispiels eines Werkzeugs;
- Figur 11: eine perspektivische Ansicht des Werkzeugs gemäß Figur 10 ohne Schneidplatte;
- Figur 12: eine Seitenansicht des Werkzeugs gemäß Figur 10 und
- Figur 13: eine Stirnansicht des in den Figuren 10 und 12 dargestell- ten Werkzeugs.

Kerngedanke bei der Ausgestaltung des Werkzeugs ist es, dass dieses bei der spanenden Bearbeitung von Bohrungsoberflächen sich über die mindestens eine Schneidplatte der Schneideinrichtung und wenigstens eine Führungsfläche an der Bohrungsoberfläche abstützt. Dabei ist vorgesehen, dass die mindestens eine Schneidplatte einen Bogenschliff aufweist, durch den eine an die mindestens eine geometrisch definierte Schneide der Schneidplatte angrenzende Stützfläche geschaffen wird, sodass also das Werkzeug über diese Stützfläche der mindestens einen Schneidplatte und die mindestens eine Führungsfläche in der Bohrung geführt wird.

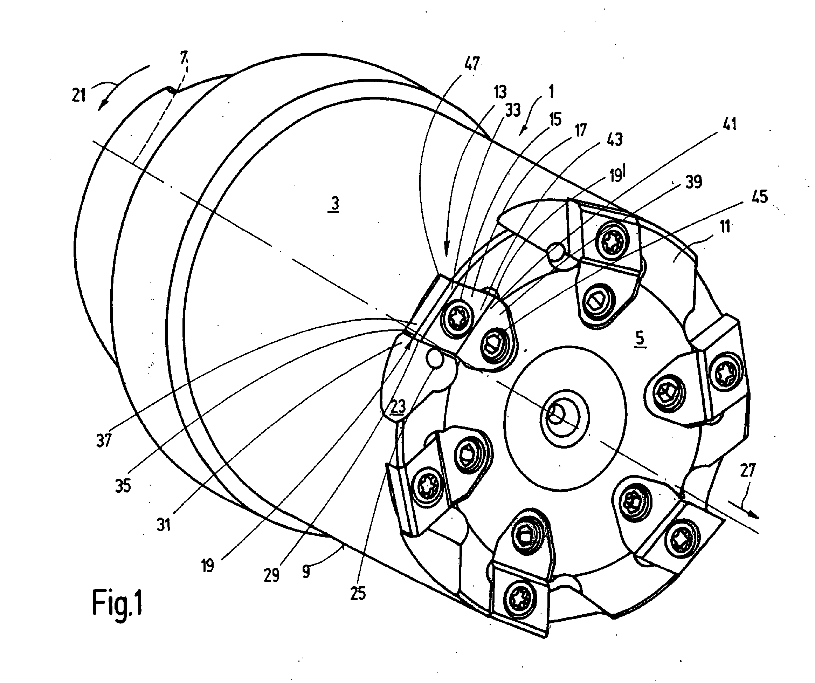

Das in Figur 1 dargestellte erste Ausführungsbeispiel eines Werkzeugs 1 zur zerspanenden Bearbeitung von Bohrungen weist einen Grundkörper 3 mit einer Stirnfläche 5 auf, die in einer Ebene liegt, auf der die Mittelachse 7 des Werkzeugs 1 senkrecht steht.

Die Stirnfläche 5 weist eine nach außen in Richtung zur Umfangsfläche 9 des Werkzeugs 1 abfallende Ringfläche 11 auf. In diese ist die mindestens eine Schneidplatte 13 des Werkzeugs 1 tangential eingesetzt. Mit tangential ist gemeint, dass die Vorderfläche der Schneidplatte 13 im Wesentlichen parallel zur Ringfläche 11 des Werkzeugs 1 verläuft.

Bei dem in Figur 1 dargestellten Ausführungsbeispiel des Werkzeugs 1 handelt es sich um ein Feinbearbeitungswerkzeug mit mindestens drei, hier beispielsweise sechs Schneiden, die alle gleich ausgebildet sind. Im Folgenden wird daher die oben links - quasi in einer 11-Uhr-Position - angeordnete Schneidplatte 13 näher erläutert. Alles zu dieser Schneidplatte Gesagte gilt also auch für die anderen Schneidplatten des Werkzeugs 1. Beispielhaft wird hier davon ausgegangen, dass jeweils paarweise in etwa gegenüberliegend sechs Schneidplatten vorgesehen sind, die in einem ungleichmäßigem Abstand zueinander in den Grundkörper 3, also in die Ringfläche 11, eingelassen sind.

Die Schneidplatte 13 wird von einer geeigneten Halterung am Grundkörper 3 fixiert. Hier ist eine Spannschraube 15 vorgesehen, die die Vorderseite 17 der Schneidplatte 13 durchdringt und in den Grundkörper 3 des Werkzeugs 1 eingreift.

Die Schneidplatte 13 ist mehreckig ausgebildet, hier - in Draufsicht gesehen - im Wesentlichen rhombisch. Die obere linke Ecke der Schneidplatte 13 bildet die Schneide 19 der Schneidplatte 13. Diese steht über die Umfangsfläche 9 des Grundkörpers 3 des Werkzeugs 1 hinaus und trägt bei einer Drehung des Werkzeugs 1 in Richtung des Pfeils 21 Späne von einer Wand einer Bohrung ab. Diese gelangen in einen Spanraum 23, in den ein Kühl-/Schmiermittelkanal 25 münden kann. Das Kühl-/Schmiermittel dient der Kühlung der Schneide 19, außerdem dazu, in den Spanraum 23 gelangende Späne abzutransportieren, schließlich der Schmierung des Werkzeugs 1 in der zu bearbeitenden Bohrung.

Bei der spanenden Bearbeitung einer Bohrung kann sich das Werkzeug 1, wie gesagt, um die Mittelachse 7 drehen. Denkbar ist es aber auch, das Werkstück in Rotation zu versetzen und das Werkzeug 1 festzuhalten. Entscheidend ist die Relativbewegung zwischen Werkzeug 1 und der Wandlung der zu bearbeitenden Bohrung. Während der Bearbeitung wird das Werkzeug 1 in Richtung der Mittelachse 7 in die zu bearbeitende Bohrung hineinverlagert. Diese auch als Vorschubrichtung bezeichnete Richtung wird durch einen Pfeil 27 angedeutet.

Die Schneide 19 der Schneidplatte 13 weist zwei Bereiche auf, nämlich eine in Richtung der durch den Pfeil 27 gekennzeichneten Vorschubrichtung geneigte Hauptschneide 29 und eine in entgegengesetzter Richtung geneigte Nebenschneide 31.

Die Schneidplatte 13 ist hier, wie auch die anderen Schneidplatten, als Wendeplatte ausgelegt, das heißt die diagonal gegenüberliegende Ecke der Schneidplatte 13 ist ebenfalls als Schneide 19' ausgebildet. Wenn die Schneide 19 abgenutzt oder beschädigt ist, wird die Schneidplatte 13 um eine senkrecht auf der Vorderseite 17 stehende Achse um 180° gedreht, sodass die Schneide 19' an der in Figur 1 wiedergegebenen Position der Schneide 19 angeordnet ist.

Aus der Darstellung gemäß Figur 1 ist ersichtlich, dass sich an die Vorderseite 17 der Schneidplatte 13 eine nach außen geneigte Fase 33 anschließt, deren Breite der Länge der Hauptschneide 29 entspricht.

An die Nebenschneide 31 schließt sich eine durch einen Bogenschliff erzeugte Stützfläche 35 an, die hier nur durch einen parallel zur Nebenschneide 31 verlaufenden Strich angedeutet ist. Die Stützfläche 35 ist gewölbt ausgebildet, wobei der Radius der Wölbung kleiner ist als der Radius der zu bearbeitenden Bohrung. Die Wölbung verläuft dabei quer zur Mittelachse 7.

Die Stützfläche 35 grenzt unmittelbar an die Nebenschneide 31 an. Der der Nebenschneide 31 abgewandte Endbereich der Stützfläche 35 geht in die Freifläche 37 der Schneidplatte 13 über. Die Freifläche 37 fällt, ausgehend von der Fase 33 entgegengesetzt zur durch den Pfeil 27 angedeuteten Vorschubrichtung ab. Damit fällt also die der Hauptschneide 29 zugeordnete Fase 33 in Vorschubrichtung ab.

Der Überstand der Schneide 19 der Schneidplatte 13 über die Umfangsfläche 9 des Grundkörpers 3 des Werkzeugs 1 ist einstellbar. Bei dem hier dargestellten Werkzeug 1 wird die radiale Einstellbarkeit der Schneidplatte 13 dadurch realisiert, dass ein Stellkörper 39 vorgesehen ist, der mit einer Stellfläche 41 auf die radial innen liegende Seitenfläche 43 der Schneidplatte 13 wirkt. Die Stellfläche 41 und die Seitenfläche 43 sind so geneigt, dass quasi ein Keilgetriebe ausgebildet wird. Durch eine Stellschraube 45, die einerseits in den Stellkörper 39 und andererseits in den Grundkörper 3 des Werkzeugs 1 eingreift, kann die Position des Stellkörpers 39 eingestellt werden. Diese ist mehr oder weniger weit in die Stirnfläche 5 hinein verlagert. Das Keilgetriebe kann beispielsweise so ausgebildet sein, dass bei einer weiteren Verlagerung des Stellkörpers 39 in den Grundkörper 3 hinein die Schneidplatte 13 radial nach außen verlagert wird. Stelleinrichtungen der hier angesprochenen Art sind bekannt (siehe beispielsweise die deutsche Patentanmeldung 10060283), sodass hier nicht weiter darauf eingegangen wird. Im Übrigen kommt es für die Funktion der radialen Einstellbarkeit der Schneidplatte 13 nicht auf die Realisierung der Stelleinrichtung an. Der hier dargestellte Stellkörper 39 zeichnet sich allerdings dadurch aus, dass er einen V-förmige Außenkontur aufweist, die in eine entsprechende V-förmige Ausnehmung im Grundkörper 3 des Werkzeugs 1 eingreift und somit eine exakte Winkelpositionierung ermöglicht. Damit wird sichergestellt, dass bei einer radialen Verlagerung der Schneidplatte 13 diese nicht durch die Spannschraube 15 verdreht wird. Dadurch bleibt die Winkelposition der Freifläche 37 gegenüber dem Grundkörper 3 des Werkzeugs 1 erhalten. Die Freifläche 37 fällt nämlich auch, ausgehend von der Stützfläche 35 - nach der Perspektive gemäß Figur 1 - von links nach rechts ab, um zu verhindern, dass die der Schneide 19 gegenüberliegende Ecke 47 der Schneidplatte die Wand der zu bearbeitenden Bohrung berührt und damit beschädigt.

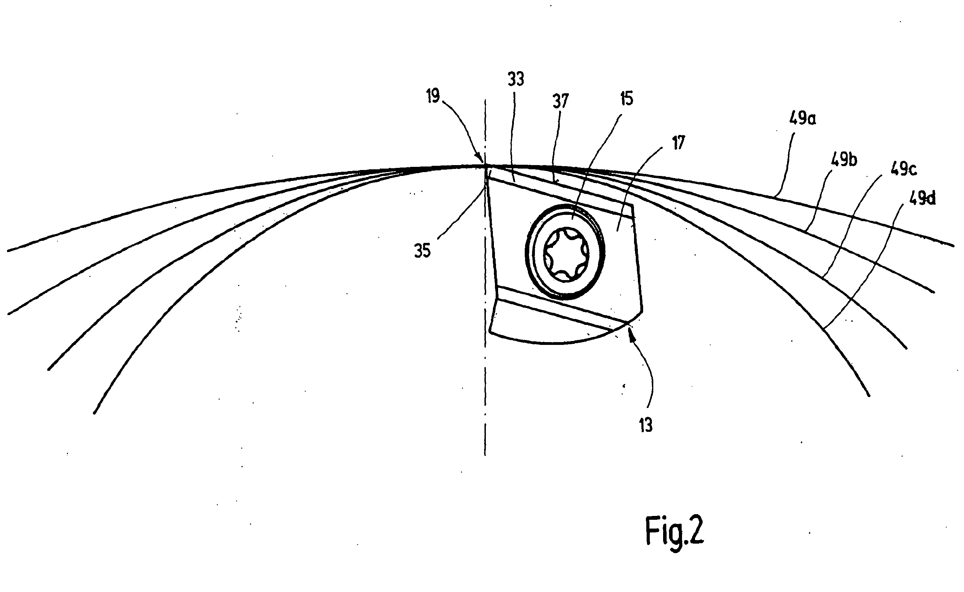

Figur 2 zeigt beispielsweise die Schneidplatte 13 des Werkzeugs 1 aus einer Blickrichtung entlang der in Figur 1 wiedergegebenen Mittelachse 7. Damit gibt Figur 2 praktisch eine Draufsicht auf die Stirnfläche 5 und die Ringfläche 11 wieder, in die die hier abgebrochen dargestellte Schneidplatte 13 eingesetzt ist. Aus Gründen der besseren Übersichtlichkeit wurde der Stellkörper 39 weggelassen. Teile, die mit denen gemäß Figur 1 übereinstimmen, wurden mit gleichen Bezugsziffern versehen, so dass insofern auf deren Beschreibung verwiesen wird.

In Figur 2 ist die Schneide 19 erkennbar. Die Stützfläche 35 kann gerade noch wahrgenommen werden. Die Freifläche 37 ist dagegen gut erkennbar, ebenso die der Hauptschneide zugeordnete Fase 33. Figur 2 gibt außerdem die Vorderseite 17 der Schneidplatte 13 wieder. Schließlich ist auch die Spannschraube 15 gut zu erkennen.

Figur 2 dient dazu darzustellen, dass die Schneidplatte 13 dazu verwendet werden kann, Bohrungen mit unterschiedlichen Durchmessern zu bearbeiten. Um dies zu verdeutlichen, sind in Figur 2 vier Linien dargestellt, die Kreisabschnitte wiedergeben, nämlich die Kreisabschnitte 49a, 49b, 49c und 49d der zu bearbeitenden Bohrungswandung.

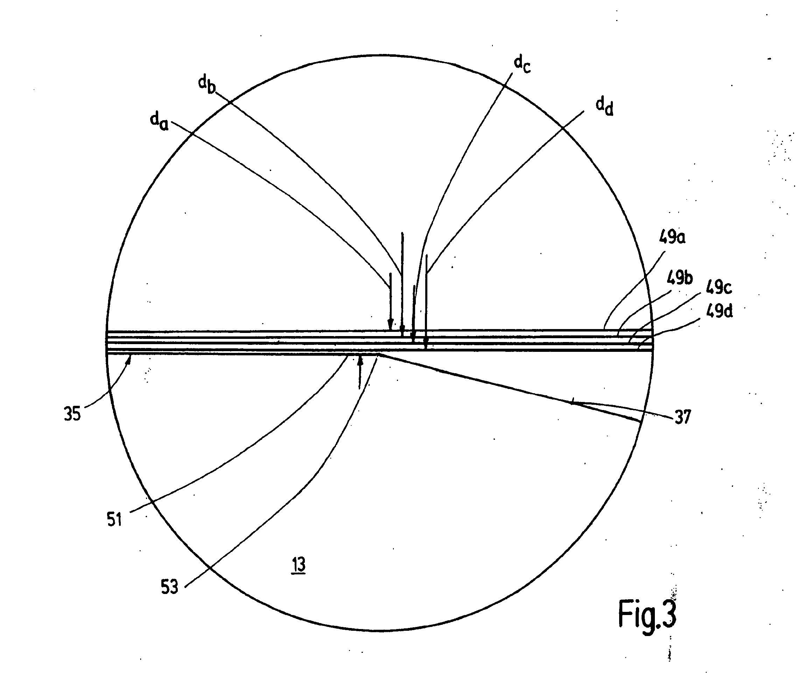

Figur 3 gibt eine Prinzipskizze eines Teils einer Stützfläche 35 wieder, nämlich den Endbereich der Stützfläche 35 einer Schneidplatte 13, der in die Freifläche 37 übergeht. Deutlich ist erkennbar, dass im Übergangsbereich zwischen dem Endbereich 51 und der Freifläche 37 quasi ein Knick 53 ausgebildet wird, weil die Freifläche 37 steiler abfällt als der Endbereich 51 der Stützfläche 35. In der Darstellung gemäß Figur 3 ist nicht erkennbar, dass die Stützfläche 35 gewölbt ausgebildet ist, weil hier lediglich eine Prinzipskizze wiedergegeben wird. Die hier praktisch parallel verlaufenden Linien geben die Kreisabschnitte 49a, 49b, 49c und 49d wieder, die natürlich nur scheinbar parallel sind, in Wirklichkeit aber entsprechend den unterschiedlichen Radien der Bohrungswand gekrümmt sind.

Da Figur 3 lediglich den Übergangsbereich zwischen Stützfläche 35 und Freifläche 37 wiedergibt, also den Knick 53, ist entsprechend der Darstellung gemäß Figur 2 die Schneide 19 der Schneidplatte 13 in einem deutlichen Abstand links zum Knick 53 angeordnet. Gemäß Figur 2 berühren sich die Kreisabschnitte 49a bis 49d im Bereich der Schneide 19.

Aus Figur 3 wird deutlich, dass bei dem größten Durchmesser der zu bearbeitenden Bohrung der Kreisabschnitt 49a zum Endbereich 51 der Stützfläche 35 einen Abstand dₐ aufweist, der größer ist als der Abstand d_{d} des Kreisabschnitts 49d zum Endbereich 51. Entsprechend ist der Abstand d_{b} des Kreisabschnitts 49b kleiner als der Abstand dₐ. Schließlich ist auch der Abstand d_{c} des Kreisabschnitts 49c zum Endabschnitt 51 kleiner als der Abstand d_{b}.

Die Abstände dₐ bis d_{d} der Kreisabschnitte 49a bis 49d zum Endbereich 51 werden also um so kleiner, je kleiner die Durchmesser der zu bearbeitenden Bohrung sind.

Es sei schließlich noch einmal ausdrücklich darauf hingewiesen, dass die Stützfläche 35 unter einem Bogen geschliffen, also unter einem Radius gewölbt ist, der kleiner ist als der Radius der zu bearbeitenden Bohrung.

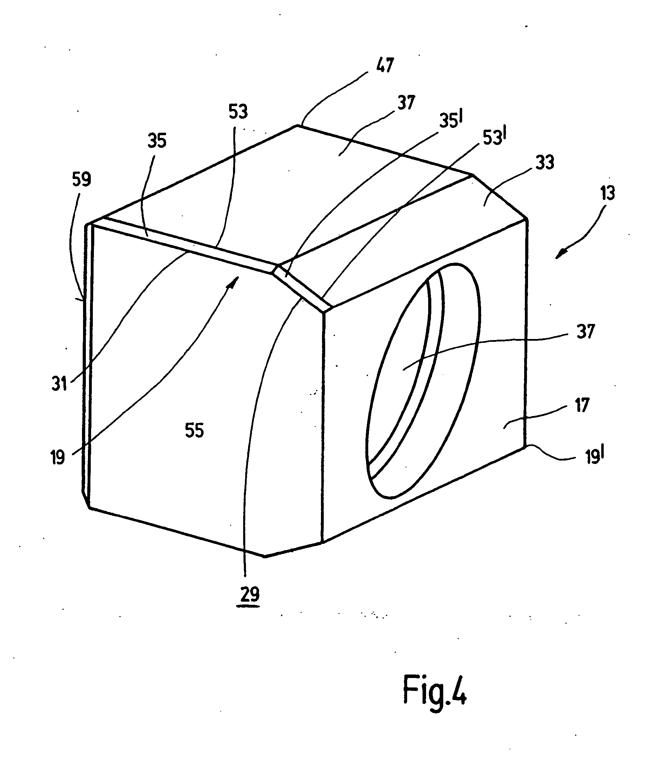

Figur 4 zeigt eine Schneidplatte 13 des Werkzeugs 1 gemäß Figur 1 von schräg vorne. Gleiche Teile sind mit gleichen Bezugsziffern versehen, so dass auf die vorangegangenen Figuren verwiesen wird, um Wiederholungen bei der Beschreibung zu vermeiden.

Durch die perspektivische Ansicht von schräg vorne ist die Schneidplatte 13 etwas verzerrt dargestellt. Es wird davon ausgegangen, dass sie die rhombische Form aufweist, die sich aus Figur 1 ergibt.

Dem Betrachter zugewandt ist eine Seitenfläche 55 der Schneidplatte 13, die in die durch den Pfeil 21 angedeuteten Drehrichtung des Werkzeugs 1 weist. Deutlich erkennbar ist hier die Schneide 19 der Schneidplatte 13, die eine Hauptschneide 29 sowie eine Nebenschneide 31 umfasst. Dabei ist die Hauptschneide 29 in Richtung der durch den Pfeil 27 in Figur 1 dargestellten Vorschubrichtung geneigt.

Die Seitenfläche 55 geht in die Vorderseite 17 der Schneidplatte 13 über, die mit einer die Spannschraube 15 aufnehmenden Durchgangsöffnung 57 versehen ist.

Oben geht die Seitenfläche 55 über die Hauptschneide 29 in die Fase 33 über und über die Nebenschneide 31 in die Freifläche 37.

Insbesondere im Bereich der Nebenschneide 31 ist die durch einen Bogenschliff realisierte Stützfläche 35 vorgesehen, die sich unmittelbar an die Nebenschneide 31 anschließt und über den anhand von Figur 3 erläuterten Knick 53 in die Freifläche 37 übergeht.

Bei dem in Figur 4 wiedergegebenen Ausführungsbeispiel der Schneidplatte 13 ist beispielhaft angedeutet, dass auch im Bereich der Hauptschneide 29 eine durch einen Bogenschliff realisierte Stützfläche 35' vorgesehen werden kann, über die sich die Schneidplatte 13 gemeinsam mit der Stützfläche 35 an der Wand der zu bearbeitenden Bohrung abstützt.

Ist, wie in Figur 4 dargestellt, auch im Bereich Hauptschneide 29 eine Stützfläche 35' vorgesehen, so gelten die in Figur 3 wiedergegebenen Gesichtspunkte auch für den Übergang zwischen der Stützfläche 35' und der Fase 33, wobei hier ein Knick 53' realisiert wird.

Anstelle der Stützfläche 35', die unter einem Radius gewölbt ist, kann auch eine ebene Fase vorsehen sein, die sich unmittelbar an die Hauptschneide 29 anschließt und die in die oben beschriebene Fase 33 übergeht. Dabei kann auch zwischen der an die Hauptschneide 29 angrenzenden Fase und der angesprochenen Fase 33 ein Knick 53' gegeben sein, weil die beiden Fasen, von der Stirnseite 55 aus gesehen, unter einem unterschiedlichen Winkel verlaufen.

Es ist aber sehr wohl auch möglich, dass sich die Fase 33 unmittelbar an die Hauptschneide 29 anschließt und hier auf eine Stützfläche 35' verzichtet wird.

Aus Figur 4 ist die in Figur 1 erläuterte Ecke 47 der Schneidplatte 13 ersichtlich. Außerdem ist hier noch die der Schneide 19 gegenüberliegende Schneide 19' erkennbar, die allerdings nur dann vorgesehen wird, wenn die Schneidplatte 13 als Wendeplatte ausgebildet ist. Sollte dies nicht der Fall sein, weist die Schneidplatte 13 lediglich eine einzige Schneide auf, nämlich die Schneide 19.

Figur 4 zeigt deutlich, dass die der Vorderseite 17 gegenüberliegende Rückseite 59 nicht weiter ausgestaltet ist, insbesondere sind hier keine Schneidkanten realisiert, wie sie im Bereich der Vorderseite 17 vorgesehen sind. Es ist aber auch möglich, die Schneidplatte 13 so auszubilden, dass die Rückseite 59 identisch ausgebildet ist wie die Vorderseite 17. Bei einem Verschleiß der Schneiden 19 und 19' kann dann die Schneidplatte 13 so gewendet werden, dass die Rückseite 59 in Richtung der durch den Pfeil 27 dargestellten Vorschubrichtung weist und hier dann entsprechend den Schneiden 19 und 19' ausgebildete Schneiden vorgesehen sind. In diesem Fall würde die Schneidplatte 13 insgesamt vier für die Bearbeitung einer Bohrung zur Verfügung stehende Schneiden aufweisen.

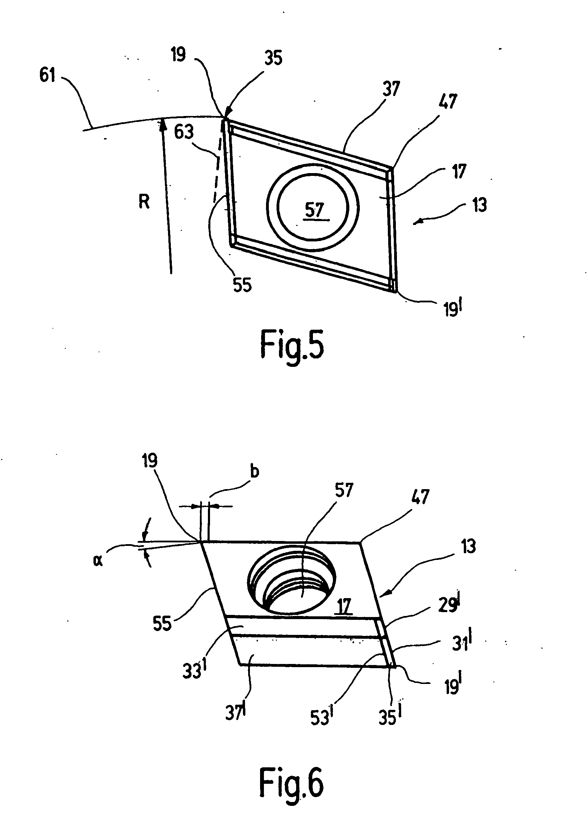

Figur 5 zeigt eine Draufsicht auf eine Schneidplatte 13 des Werkzeugs 1 gemäß Figur 1. Gleiche Teile sind mit gleichen Bezugsziffern versehen, so dass insofern auf die Beschreibung zu den vorangegangenen Figuren verwiesen wird.

Die Schneidplatte 13 weist eine Vorderseite 17 auf, in die eine Durchgangsöffnung 57 für eine hier nicht dargestellte Spannschraube 15 mündet. Oben links ist die Schneide 19 angedeutet, diagonal gegenüber die Schneide 19'. Erkennbar ist auch die Ecke 47.

Eine Hilfslinie 61 zeigt den Verlauf des Bogenschliffs im Bereich der Stützfläche 35, an die sich die Freifläche 37 anschließt.

Der Radius R des Bogenschliffs ist ebenfalls durch einen Pfeil angedeutet, also der Radius der Wölbung der Stützfläche 35.

Die in Figur 5 wiedergegebene Seitenfläche 55 liegt nicht auf einer Durchmesserlinie des Werkzeugs 1. Sie ist - gemäß der Darstellung in Figur 5 - gegenüber dieser nach rechts verschwenkt, was durch eine Hilfslinie 63 angedeutet ist. Dabei steht die gedachte Schwenkachse senkrecht auf der Bildachse von Figur 5 und verläuft durch die Schneide 19.

Figur 6 zeigt eine perspektivische Ansicht einer Schneidplatte 13 gemäß Figur 1 von schräg unten. Gleiche Teile sind mit gleichen Bezugsziffern versehen, so dass insofern auf die vorangegangene Beschreibung verwiesen wird.

Die rhombische Form des Grundkörpers der Schneide 13 ist hier deutlich erkennbar. Ersichtlich sind auch die Schneide 19, die Durchgangsöffnung 57, die Ecke 47, die Schneide 19', die Seitenfläche 55 sowie die Vorderseite 17 der Schneidplatte 13. Figur 6 zeigt einen Winkel α, nämlich den Winkel, um den eine sich an die Hauptschneide 29 unmittelbar anschließende Fase geneigt ist.

In Figur 6 ist außerdem die Breite b dieser Fase angedeutet. Über den Bereich dieser Breite b erstreckt sich im Übrigen auch die Stützfläche 35, die zumindest im Bereich der Nebenschneide 31 vorgesehen ist.

Da Figur 6 eine perspektivische Ansicht auch der Unterseite der Schneidplatte 13 zeigt, die in Figur 1 dem Stellkörper 39 zugewandt ist, sind hier die Fase 33' im Bereich der Hauptschneide 29' sowie die Freifläche 37' im Bereich der Nebenschneide 31' ersichtlich. Außerdem sind die Stützfläche 35' und der Knick 53' im Bereich der Schneide 19' erkennbar.

Bei dem in Figur 1 dargestellten Werkzeug 1 handelt es sich, wie gesagt, um ein Bohrungsfeinbearbeitungswerkzeug, das insbesondere zum Schlichten von Bohrungen geeignet ist. Die radialen Schnitttiefen betragen hier in der Regel maximal bis zu 0,5 mm.

Es ist aber auch möglich, Werkzeuge zu realisieren, die mit entsprechend der oben genannten Art ausgebildeten Schneiden zum Schruppen ausgestattet sind, also eine Bearbeitung mit höheren Schnitttiefen von bis zu 6 mm bis 8 mm ermöglichen. Es hat sich auch hier gezeigt, dass das Werkzeug über einen bestimmten Durchmesserbereich durch die Stützfläche weit ruhiger, also ohne Vibrationen, bei der Bearbeitung von Bohrungen läuft, als dies bei herkömmlichen Werkzeugen der Fall ist.

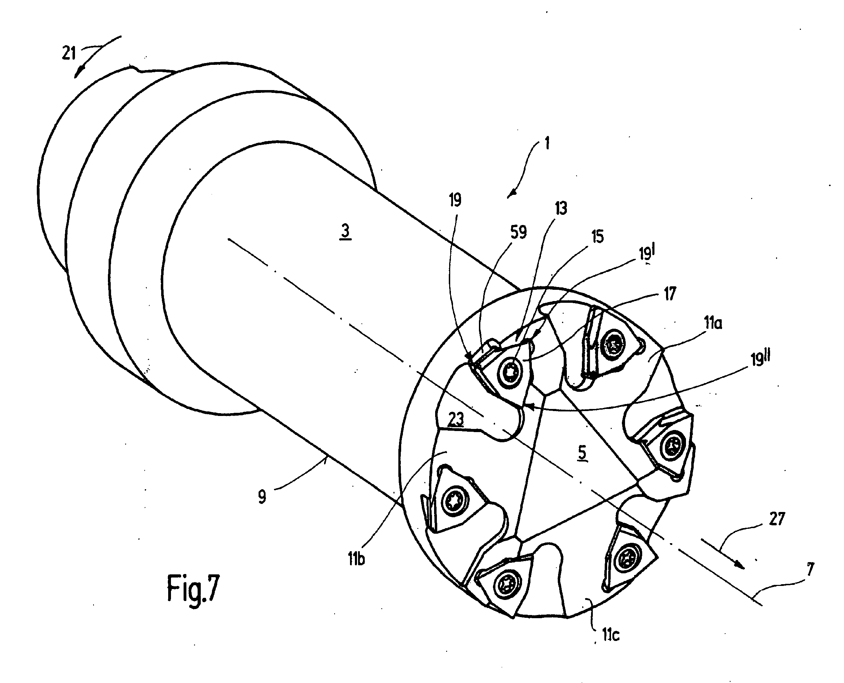

Figur 7 zeigt eine perspektivische Vorderansicht eines zweiten Ausführungsbeispiels eines Werkzeugs 1, das der Schruppbearbeitung dient und mindestens drei Schneidplatten aufweist. Bei dem hier dargestellten Ausführungsbeispiel sind sechs einander paarweise in etwa gegenüberliegende Schneidplatten vorgesehen. Es wird auch hier lediglich eine einzige Schneide beschrieben, da alle übrigen identisch ausgebildet sind.

Teile, die denen entsprechen, wie sie bereits beschrieben wurden, tragen zur Vereinfachung die gleichen Bezugsziffern.

Das Werkzeug 1 weist einen Grundkörper 3 mit einer Stirnfläche 5 auf. Außerdem sind eine Mittelachse 7 ersichtlich, sowie die Umfangsfläche 9. Die Stirnfläche 5 liegt in einer Ebene, auf der die Mittelachse 7 senkrecht steht. Es sind hier gegenüber der Stirnfläche 5 abfallende Bereiche erkennbar, die im Wesentlichen der Ringfläche 11 entsprechen, nämlich Bereiche 11a, 11b und 11c. In diese sind hier die sechs Schneidplatten eingelassen. Diese sind quasi tangential angeordnet, nämlich so, dass deren Vorderseiten im Wesentlichen parallel zu den entsprechenden Bereichen angeordnet sind.

Die weiteren Erläuterungen beziehen sich auf die oben links angeordnete Schneidplatte. Diese ist mehreckig ausgebildet, hier beispielsweise im Wesentlichen dreieckförmig, wobei allerdings die drei Seitenkanten in der Mitte jeweils einen nach außen weisenden Knick umfassen. Die Schneidplatte 13 ist mit Hilfe einer Spannschraube 15 am Grundkörper 3 befestigt, die die Schneidplatte 13 durchdringt und in den Grundkörper 3 eingreift. Andere Befestigungsarten sind hier, wie bei dem in Figur 1 dargestellten Ausführungsbeispiel, sehr wohl möglich und im Übrigen bekannt.

Die Schneidplatte 13 hat hier oben links eine Schneide 19, außerdem oben rechts eine Schneide 19' und unten, in Richtung zur Mittelachse 7 gewandt, eine Schneide 19".

Ist also die Schneide 19 verschlissen oder beschädigt, kann die Schneidplatte 13 um die Achse der Spannschraube 15 um 120° gedreht werden, so dass an die Stelle der Schneide 19 die Schneide 19', beziehungsweise bei einer weiteren Drehung die Schneide 19" tritt.

Überdies kann die Schneidplatte 13 so gewendet werden, dass die Vorderseite 17 auf dem Grundkörper 13 aufliegt und die Rückseite 59 der Schneidplatte 13 nach vorne weist, also praktisch in Richtung der durch den Pfeil 27 angedeuteten Vorschubrichtung 27 des Werkzeugs 1.

Die aus Figur 7 ersichtliche Schneidplatte 13 des als Schruppwerkzeug ausgelegten Werkzeugs 1 weist hier also insgesamt sechs Schneiden auf.

Die Schneidplatten des Werkzeugs 1 gemäß Figur 7 sind in zwei Richtungen geneigt: Einerseits sind sie ausgehend von der Mittelachse 7 nach außen in Richtung zur Umfangsfläche 9 geneigt angeordnet. Außerdem sind sie, von der Mittelachse 7 aus gesehen, im Uhrzeigersinn verkippt, so dass bei der Darstellung gemäß Figur 7 die Schneide 19 höher angeordnet ist, als die Schneide 19' und bei der Bearbeitung einer Bohrung mit deren Wandung in Eingriff tritt.

Auch bei dem in Figur 7 dargestellten Ausführungsbeispiel des Werkzeugs 1 ist vorgesehen, dass - in Richtung der durch einen Pfeil 21 dargestellten Drehrichtung gesehen - der Messerplatte 13 ein Spanraum 23 voreilt. Auch hier kann ein Kühl-/Schmiermittelkanal münden, was hier allerdings aus Gründen der Vereinfachung nicht dargestellt ist.

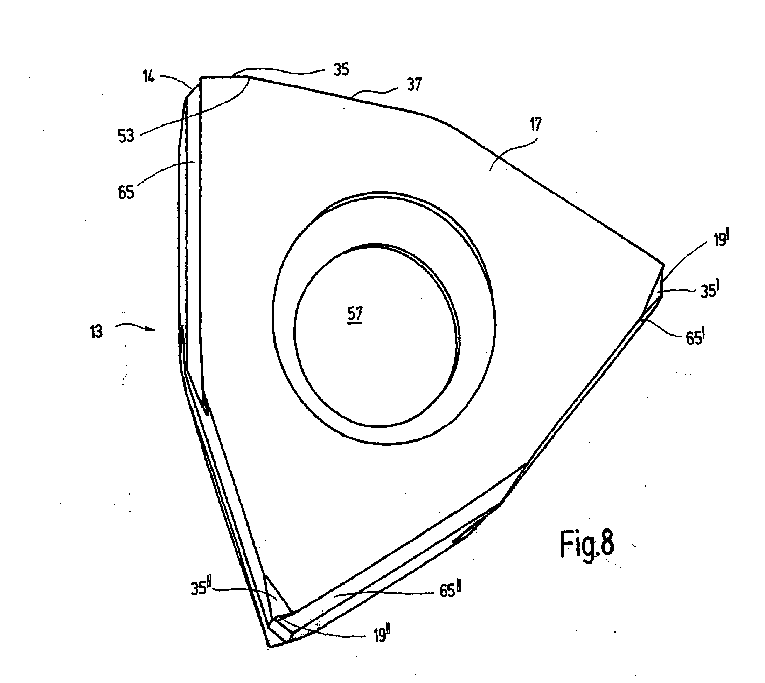

Figur 8 zeigt eine perspektivische Vorderansicht der Schneidplatte 13 des Werkzeugs 1 gemäß Figur 2 in Richtung der Mittelachse 7 gesehen. Oben links ist die Schneide 19 zu erkennen, rechts die Schneide 19' und unten die Schneide 19". Nach rechts schließt sich an die Schneide 19 der Bereich des Bogenschliffs an, also die Stützfläche 35. Über den Knick 53 geht diese in die Freifläche 37 der Schneide 19 über.

Bei den Schneiden 19' und 19" ist die Stützfläche 35' beziehungsweise 35" besser zu erkennen. Allen Schneiden ist ein Spanraum zugeordnet, nämlich der Schneide 19 ein Spanraum 65, der Schneide 19' ein Spanraum 65' und der Schneide 19" ein Spanraum 65". Bei einem Schruppwerkzeug erstrecken sich die Schneiden praktisch über die ganze Breite des zugehörigen Spanraums.

Figur 8 zeigt, dass die Vorderseite 17 der Schneidplatte 13 von einer Durchgangsöffnung 57 durchbrochen wird, durch die die Spannschraube 15 hindurchgreifen kann, um die Schneidplatte 13 am Grundkörper 3 des Werkzeugs 1 zu befestigen, wie dies aus Figur 7 ersichtlich ist.

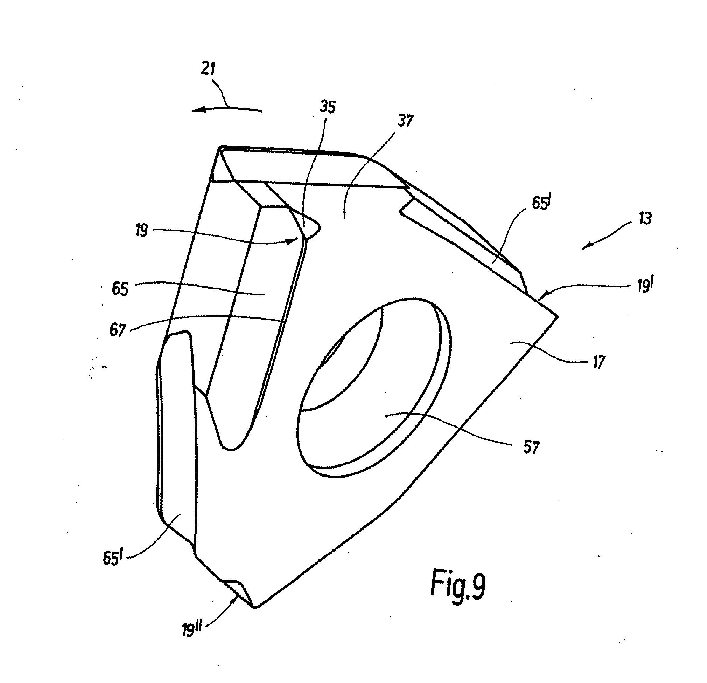

Figur 9 zeigt eine perspektivische Unteransicht der Schneidplatte 13, die anhand der Figuren 7 und 8 bereits erläutert wurde. Gleiche Teile sind mit gleichen Bezugsziffern versehen, so dass insofern auf die vorangegangene Beschreibung verwiesen werden kann.

Die Schneidplatte 13 weist auf ihrer Vorderseite 17 drei Schneiden 19, 19' und 19" auf, wie dies anhand von Figur 8 erläutert wurde. Der Spanraum 65 der Schneide 19 geht über eine Schutzfase 67 in die Vorderseite 17 der Schneidplatte 13 über. Entsprechend ist auch bei dem Spanraum 65' der Schneide 19' und bei dem der Schneide 19" zugeordneten Spanraum 65" eine Schutzfase vorgesehen.

Auch hier ist deutlich zu erkennen, dass in die Vorderseite 17 eine Durchgangsöffnung 57 mündet, durch die die in Figur 7 dargestellte Spannschraube 15 hindurchgreift.

Der Schneide 19 ist eine durch einen Bogenschliff realisierte Stützfläche 35 zugeordnet. Die Stützfläche der Schneide 19' ist, ebenso wie die Stützfläche der Schneide 19", nicht erkennbar.

Auch hier ist vorgesehen, dass die Stützflächen gewölbt ausgebildet sind, wobei der Radius der Wölbung kleiner ist als der der zu bearbeitenden Bohrung.

Die Vorderseite 17 geht hier über einen Radius in die Freiflächen der Schneiden über. In Figur 9 ist die Freifläche 37 ersichtlich, die in der durch einen Pfeil 21 angedeuteten Drehrichtung gesehen, der Stützfläche 35 nacheilt.

Im Übrigen gilt das zum ersten Ausführungsbeispiel zu den Stützflächen und Freiflächen Gesagte entsprechend.

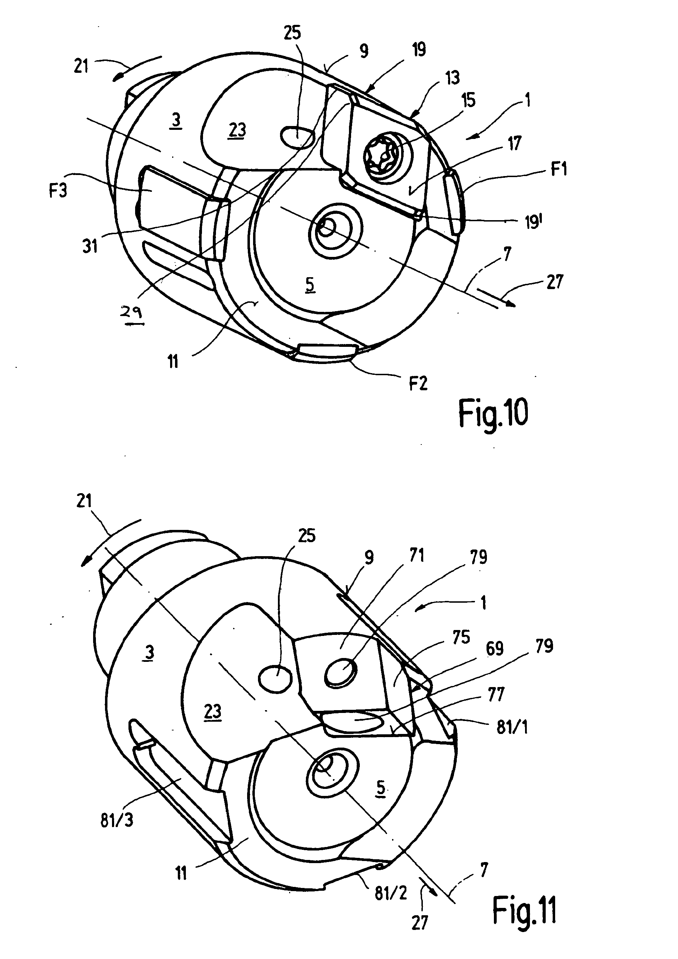

Figur 10 zeigt ein drittes Ausführungsbeispiel eines Werkzeugs 1. Gleiche Teile, die bei den vorangegangenen Ausführungsbeispielen erläutert wurden, sind mit gleichen Bezugsziffern versehen, sodass insofern auf die Beschreibung zu den vorangegangenen Figuren verwiesen wird, um Wiederholungen zu vermeiden.

Das Werkzeug 1 gemäß Figur 10 zeichnet sich dadurch aus, dass es sich über drei Flächen in der zu bearbeitenden Bohrung abstützt. Es weist einen Grundkörper 3 mit einer Stirnfläche 5 auf, die in einer Ebene liegt, auf der die Mittelachse 7 des Werkzeugs 1 senkrecht steht.

Die Stirnfläche 5 weist eine nach außen in Richtung zur Umfangsfläche 9 des Werkzeugs 1 abfallende Ringfläche 11 auf. Eine Schneidplatte 13 ist an der Stirnfläche 5 des Werkzeugs 1 befestigt. Hier ist vorzugsweise, wie bei den anderen Ausführungsbeispielen vorgesehen, dass die Schneidplatte 13 in die Ringfläche 11 der Stirnfläche 5 eingelassen ist. Die Schneidplatte 13 ist tangential am Werkzeug 1 angebracht, das heißt, dass die Vorderfläche der Schneidplatte 13 im Wesentlichen parallel zur Ringfläche 11 des Werkzeugs 1 angeordnet ist.

Die Schneidplatte 13 wird von einer geeigneten Halterung am Grundkörper 3 des Werkzeugs 1 fixiert. Hier ist eine Spannschraube 15 vorgesehen, die die Vorderseite 17 der Schneidplatte 13 durchdringt und in den Grundkörper 3 des Werkzeugs 3 eingreift.

Die Schneidplatte 13 ist auch hier mehreckig ausgebildet und - in Draufsicht gesehen - im Wesentlichen rhombisch. Die obere linke Ecke der Schneidptatte 13 bildet deren Schneide 19, die über die Umfangsfläche 9 des Grundkörpers 3 des Werkzeugs 1 hinaussteht und bei einer Drehung des Werkzeugs 1 in Richtung des Pfeils 21 Späne von einer Wand einer Bohrung abträgt. Diese gelangen in einen Spanraum 23, in den ein Kühl-/Schmiermittelkanal 25 münden kann. Das Kühl-/Schmiermittel dient der Kühlung der Schneide 19, außerdem dazu, in den Spanraum 23 gelangende Späne abzutransportieren, schließlich der Schmierung des Werkzeugs 1 in der zu bearbeitenden Bohrung.

In der Regel wird das in Figur 10 dargestellte Werkzeug 1 in Rotation versetzt, um eine Bohrungswand zu bearbeiten. Es gilt das zu Werkzeug 1 in Figur 1 Gesagte entsprechend.

Die Schneide 19 der Schneidkante 13 weist auch hier zwei Bereiche auf, nämlich mindestens eine in Richtung der durch den Pfeil 27 gekennzeichneten Vorschubrichtung geneigte Hauptschneide 29 und eine in entgegengesetzter Richtung geneigte Nebenschneide 31. Die Schneidplatte 13 ist hier, wie auch bei den anderen Ausführungsbeispielen, als Wendeplatte ausgelegt, das heißt, die diagonal gegenüberliegende Ecke der Schneidplatte 13 ist ebenfalls als Schneide 19' ausgebildet. Wenn also die Schneide 19 abgenutzt oder beschädigt ist, wird die Schneidplatte 13 um eine senkrecht auf der Vorderseite 17 stehende Achse um 180° gedreht, sodass die Schneide 19' an der in Figur 10 wiedergegebenen Position der Schneide 19 angeordnet ist.

Im Übrigen gilt für die Schneidplatte 13, wie sie aus Figur 10 ersichtlich ist, alles, was zur Schneidplatte 13 anhand der Figuren 1 bis 6 erläutert wurde.

Das aus Figur 10 ersichtliche Ausführungsbeispiel des Werkzeugs 1 unterscheidet sich bezüglich der Schneidplatte 13 selbst nicht von dem Ausführungsbeispiel des Werkzeugs 1 beziehungsweise der Schneidplatte 13, das in den Figuren 1 bis 6 dargestellt wurde.

Aus Figur 10 ergibt sich, dass das hier dargestellte Ausführungsbeispiel des Werkzeugs 1 lediglich eine einzige Schneidplatte 13 aufweist und dass zusätzlich mindestens eine Führungsleiste F vorgesehen ist. Bei dem hier dargestellten Ausführungsbeispiel sind drei Führungsleisten F1, F2 und F3 vorgesehen. Eine erste Führungsleiste F1 eilt der Schneide 19 der Schneidplatte 13, in der durch den Pfeil 21 angedeuteten Drehrichtung des Werkzeugs 1 gesehen, nach, vorzugsweise um 40°. Die zweite Führungsleiste F2 ist der Schneide 19 der Schneidplatte 13 gegenüberliegend angeordnet, wobei eine die Schneide 19 und die Mittelachse 7 schneidende gedachte Linie die Führungsleiste F2 mittig schneidet. Eine dritte Führungsleiste F3 ist so angeordnet, dass sie der zweiten Führungsleiste F2, in der durch den Pfeil 21 angedeuteten Drehrichtung gesehen, um 90° nacheilt.

Wie aus den Erläuterungen zu den vorangegangenen Figuren deutlich wurde, weist die Schneidplatte 13 eine durch einen Bogenschliff erzeugte Stützfläche 35 auf, die gewölbt ausgebildet ist, wobei der Radius der Wölbung kleiner ist als der Radius der zu bearbeitenden Bohrung. Das Werkzeug 1 stützt sich also zum einen an dieser Stützfläche 35 ab, zum anderen an der mindestens einen Führungsleiste. Bei dem in Figur 10 dargestellten Ausführungsbeispiel stützt sich das Werkzeug 1 an der in Figur 10 nicht wiedergegebenen Stützfläche 35 der Schneidplatte 13 ab, außerdem an den Führungsleisten F1, F2 und F3.

Gegenüber den anhand der Figuren 1 bis 9 dargestellten Werkzeuge, die sich ausschließlich über durch einen Bogenschliff erzeugte Stützflächen 35 an Schneidplatten 13 in einer bearbeiteten Bohrung abstützen, ist bei den in Figur 10 dargestellten Ausführungsbeispiel des Werkzeugs 1 lediglich eine einzige Schneidplatte 13 vorgesehen, die tangential in die Stirnseite 5 des Werkzeugs 1 eingesetzt ist und einen Bogenschliff aufweist, durch den eine Stützfläche gebildet wird, an der sich das Werkzeug 1 abstützen kann. Zusätzlich sind hier drei Führungsleisten F1, F2 und F3 vorgesehen.

Figur 11 zeigt das Werkzeug 1 gemäß Figur 10 ohne Schneidplatte und ohne Führungsleisten. Deutlich erkennbar ist, dass in dem Grundkörper 3 Ausnehmungen eingebracht sind, in die die Schneidplatte und die Führungsleisten eingesetzt werden. Gleiche Teile sind mit gleichen Bezugsziffern versehen, sodass insofern auf die Beschreibung zu Figur 10 verwiesen wird.

Zur Aufnahme der Schneidplatte 13 ist eine Ausnehmung 69 vorgesehen, die eine Bodenfläche 71 mit einer Gewindebohrung 73 für die hier nicht dargestellte Spannschraube, eine seitliche Stützfläche 75 und eine der Mittelachse 7 zugewandte Anlagefläche 77 umfasst. Diese weist eine Ausnehmung 79 auf, durch die eine Stellschraube auf die Schneidplatte 13 wirken kann, um deren Relativlage zum Grundkörper 3 des Werkzeugs 1 einstellen zu können. Gegebenenfalls wirkt die Stellschraube mit einem Stellkeil zusammen.

In Figur 11 sind noch im Wesentlichen parallel zur Mittelachse 7 verlaufende Ausnehmungen 81/1, 81/2 und 81/3 für die mindestens eine Führungsleiste, hier also für die Führungsleisten F1, F2 und F3, erkennbar.

Die Anzahl der Ausnehmungen richtet sich grundsätzlich nach der Anzahl der Führungsleisten.

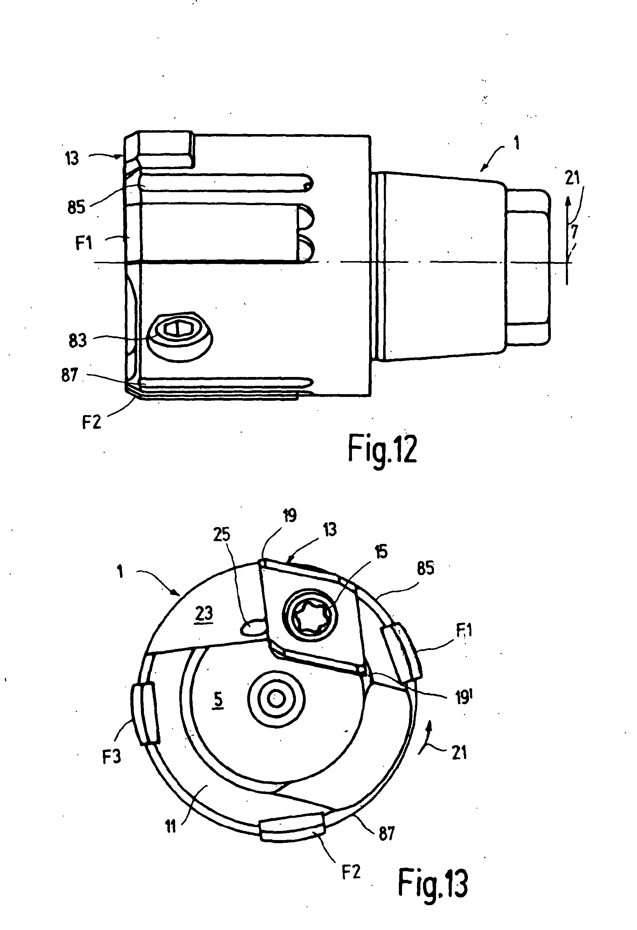

Figur 12 zeigt das Werkzeug 1 in einer Seitenansicht, nämlich - unter Berücksichtigung der Perspektive gemäß Figur 10 - einer Seitenansicht von rechts. Gleiche Teile sind mit gleichen Bezugsziffern versehen, sodass auf die vorangegangene Beschreibung verwiesen wird, um Wiederholungen zu vermeiden.

In Figur 12 sind die Messerplatte 13 und die Führungsleiste F1 zu erkennen. Außerdem die anhand der Erläuterungen zu Figur 11 erwähnte Stellschraube 83, die der radialen Justierung der Schneidplatte 13 dient. Gegenüber der Schneidplatte 13 liegt die in Figur 10 bereits erwähnte Führungsleiste F2.

Aus der Darstellung gemäß Figur 12 ist erkennbar, dass in der durch einen Pfeil 21 angedeuteten Drehrichtung gesehen der Führungsleiste F1 eine Schmiernut 85 und der Führungsleiste F2 eine Schmiernut 87 voreilt, in die Kühl-/Schmiermittel eingespeist wird, um im Bereich der Führungsleisten eine optimale Kühlung und Schmierung zu gewährleisten. Aus Figur 10 ist erkennbar, dass dort auch eine entsprechende Schmiernut für die Führungsleiste F3 vorgesehen ist.

Figur 13 zeigt das in den Figuren 10 bis 12 dargestellte Werkzeug 1 in Vorderansicht, wobei gleiche Teile mit gleichen Bezugsziffern versehen sind, sodass auf die Beschreibung insbesondere zu Figur 10 verwiesen wird. Es wird hier besonders deutlich erkennbar, dass die Schneidplatte 13 rhombisch ausgebildet und als Wendeplatte ausgebildet ist. Der außen liegenden Schneide 19 liegt diagonal gegenüber eine zweite Schneide 19', auf die oben bereits näher eingegangen wurde.

Deutlich wird hier, dass, in der durch den Pfeil 21 angedeuteten Drehrichtung gesehen, der Schneidplatte 13 die erste Führungsleiste F1 um cirka 40° nacheilt, die zweite Führungsleiste F2 der Schneide 19 gegenüberliegend angeordnet ist, und dass die Führungsleiste F3 der Schneide 19 um 90° voreilt beziehungsweise der Führungsleiste F2 um 90° nacheilt.

Aus Figur 13 wird noch einmal deutlich, dass sich das Werkzeug 1 an einer Stützfläche der Schneidplatte 13 und an der mindestens einen Führungsleiste, hier an den drei Führungsleisten F1, F2 und F3 an der Wandung einer bearbeiteten Bohrung abstützt.

Zur Wirkung der Stützflächen sei hier zusammenfassend Folgendes gesagt, wobei ausdrücklich darauf hingewiesen wird, dass dies sowohl für das Werkzeug gemäß Figur 1, also für das Feinbearbeitungswerkzeug, als auch für das Werkzeug gemäß Figur 7, also für das Schruppwerkzeug, aber entsprechend auch für das Werkzeug gemäß Figur 10 gilt.

Das Werkzeug 1 stützt sich bei der spanenden Bearbeitung einer Bohrung an deren Wandung ab, nämlich im Bereich der bei den mindestens drei Schneidplatten 13 vorgesehenen Stützflächen 35. Vorzugsweise sind bei beiden Werkzeugtypen gemäß den Figuren 1 und 7 sechs paarweise einander gegenüberliegende Schneidplatten vorgesehen. Dies ist jedoch nicht zwingend erforderlich. Es können auch weniger Schneidplatten - jedoch bei den Werkzeugen nach Figur 1 und 7 mindestens drei - vorgesehen werden. Bei dem Werkzeug nach Figur 10 ist nur eine einzige Schneidplatte vorgesehen, zusätzlich die mindestens eine Führungsleiste.

Bei den in den Figuren 1 und 7 dargestellten Ausführungsbeispielen stützt sich das Werkzeug 1 an der jeweils der Schneide 19 zugeordneten Stützfläche 35 der sechs Schneidplatten ab.

Die Stützflächen 35 der Schneidplatten 13 sind bei allen Werkzeugen alle unter einem Radius R gewölbt, der kleiner ist als der Radius der zu bearbeitenden Bohrung. Dabei liegt der unmittelbar an eine Schneide 19 angrenzende Bereich einer Stützfläche an der Wand der zu bearbeitenden Bohrung an. Der in einem Abstand zur Schneide 19 liegende Endbereich 51 der Stützflächen 35 liegt in einem Abstand zur Wand der bearbeiteten Bohrung, weil der Krümmungsradius der Stützflächen kleiner ist als der der Bohrungswandung.

Bevorzugt werden folgende Maße: Für die Bearbeitung einer Bohrung mit einem Durchmesser von 60 mm bis 120 mm wird der Radius R für den Bogenschliff der Stützfläche 35 auf 30 mm festgelegt. Die Breite der Stützfläche 35, gemessen in Umfangsrichtung, wird vorzugsweise auf 0,8 mm festgelegt. Hat die zu bearbeitende Bohrung einen Durchmesser von 121 mm bis 180 mm, wird der Radius R der mit einem Bogenschliff versehenen Stützfläche 35 mit 60 mm festgelegt. Die Breite der Stützfläche, gemessen in Umfangsrichtung, beträgt 1,2 mm.

Bei der Bearbeitung von Bohrungen im Bereich von 181 mm bis 250 mm wird ein Radius R des Bogenschliffs von 90 mm und eine Breite der Stützfläche 35 von 1,6 mm gewählt.

Die folgende Vorgabe wird für den Krümmungsradius der Stützflächen 35 gewählt: Der Krümmungsradius der Stützflächen 35 wird so auf den Radius der zu bearbeitenden Bohrung abgestimmt, dass im Endbereich 51, insbesondere im Bereich des Knicks 53, in dem die Stützfläche 35 in die Freifläche 37 übergeht zwischen dem Endbereich und der bearbeiteten Wand, ein Abstand d gegeben ist, der im Bereich von 0,02 mm bis 0,001 mm, insbesondere von 0,01 mm bis 0,003 mm liegt. Besonders bevorzugt wird ein Abstand d von ≤ 0,005 mm.

Aufgrund dieser, durch Bogenschliff gewonnenen Ausgestaltung der Stützfläche 35 ist es möglich, Bohrungen mit einem bestimmten Durchmesserbereich zu bearbeiten. In anderen Worten kann ein und dieselbe Schneide für unterschiedliche Bohrungsdurchmesser eingesetzt werden, sofern sichergestellt ist, dass der Abstand d zwischen der Wand der zu bearbeitenden Bohrung und dem Endbereich 51 einer Stützfläche 35 in dem oben angegebenen Bereich liegt.

Obwohl also hier ein Werkzeug 1 realisiert ist, das eben keine Rundschlifffase aufweist, deren Krümmungsradius dem der zu bearbeitenden Bohrung entspricht, obwohl also der bei herkömmlichen Werkzeugen gegebene Abstützeffekt gerade nicht identisch gegeben ist, zeigt sich, dass das Werkzeug 1 in den zu bearbeitenden Bohrungen optimal geführt ist, obwohl der Krümmungsradius der durch Bogenschliff erzeugten Stützfläche 35 kleiner ist als der der zu bearbeitenden Bohrung.

Bei den Werkzeugen 1 ist vorgesehen, dass die Schneidplatten 13 als Wendeplatten ausgebildet und auswechselbar sind. Sie sind stirnseitig in den Werkzeugen 1 angeordnet und quasi tangential zur Stirnfläche 5 liegend am Grundkörper 3 des Werkzeugs befestigt. Dabei können die Schneidplatten gegenüber einer exakt tangentialen Ausrichtung um zwei Achsen im Raum geschwenkt sein, sie fallen also von der Mittelachse 7 des Werkzeugs 1 aus gesehen nach außen ab und sich gleichzeitig so verdreht, dass die aktive Schneide 19 am höchsten liegt, insbesondere höher als die in der durch einen Pfeil 21 angedeuteten Drehrichtung gesehen nacheilende Bereiche der Schneidplatte 13. Durch die Verschwenkung im Raum wird der nötige Freiwinkel der Schneidkante 19 realisiert. Es hat sich im Übrigen gezeigt, dass die Breite b der Stützfläche 35, die anhand von Figur 6 erläutert wurde, um so größer ist, je größer der Durchmesser der zu bearbeitenden Bohrung ist.

Es hat sich außerdem gezeigt, dass es sehr wohl möglich ist, bestehende Werkzeuge mit Schneidplatten der hier angesprochenen Art nachzurüsten. Dadurch ergibt sich der Vorteil, dass die Schneidplatten nicht nur für einen bestimmten Durchmesser sondern für einen Durchmesserbereich einsetzbar sind, sofern die für den Abstand d zwischen der zu bearbeitenden Bohrungswand und dem Endbereich 51 einer Stützfläche 35 vorgegebene Bereiche eingehalten werden, sofern also vorzugsweise ein Abstand d ≤ 0,005 mm gegeben ist.

Die hier beschriebenen Vorteile der durch Bogenschliff realisierten Stützfläche 35 ergeben sich für Schneidplatten 13, die eine oder mehrere Schneiden aufweisen. Es ist also möglich, Schneidplatten 13 einzusetzen, die als Wendeplatten ausgebildet sind. Die Schneiden einer Schneidplatte können im Bereich der Vorderseite 17 vorgesehen werden, wie dies anhand der Figuren 1 bis 6 erläutert wurde. Es ist aber auch möglich, sowohl im Bereich der Vorderseite 17, als auch im Bereich der Rückseite 59 der Schneidplatte 13 Schneiden vorzusehen, wie dies beispielhaft erläutert wurde anhand der Schneidplatte 13 des zweiten Ausführungsbeispiels des Werkzeugs 1 gemäß Figur 7.

Aus den Erläuterungen wird überdies deutlich, dass die Schneidplatten 13 mehreckig ausgebildet werden können, insbesondre um an ein und derselben Schneidplatte mehrere Schneiden zu realisieren.

Aus den Erläuterungen wird schließlich deutlich, dass die Schneidplatten 13 einstellbar in den Grundkörper 3 eines Werkzeugs 1 eingesetzt werden können: Bei Verschleiß einer Schneide 19 kann die Schneidplatte 13 durch eine geeignete Stelleinrichtung radial nach außen verlagert werden, um den gewünschten Durchmesser des Werkzeugs 1 und damit den der bearbeiteten Bohrung zu realisieren. Auch ist die radiale Einstellbarkeit der Schneidplatten bei Einbau in den Grundkörper 3 eines Werkzeugs 1 von Vorteil, um eine höhere Genauigkeit zu erzielen.

Insgesamt zeigt sich, dass die Vorteile der hier beschriebenen Werkzeuge sich sowohl bei Werkzeugen ergeben, die mehrere Schneiden aufweisen, wie dies anhand der Figuren 1 bis 9 erläutert wurde, als auch bei Werkzeugen, die lediglich eine einzige Schneide und mindestens eine Führungsleiste umfassen, wie dies anhand der Figuren 10 bis 13 beschrieben wurde. In allen Fällen ergibt sich eine optimale Abstützung des Werkzeugs in einer zu bearbeitenden Bohrung entweder ausschließlich über Stützflächen an Schneidplatten oder über eine Stützfläche einer Schneidplatte und mindestens eine Führungsleiste.

Die tangentiale Einbaulage der Schneidplatte 13 in der Stirnfläche 5 des Werkzeugs 1 bringt mehrere Vorteile: Die Anlagefläche der Schneidplatte am Grundkörper 3 des Werkzeugs 1, die entscheidend ist für die Verjüngung der Nebenschneide, also den Abfall der Nebenschneide der Schneidplatte 13 entgegen der durch einen Pfeil 27 angedeuteten Vorschubrichtung, ist großflächig und exakt im Werkzeugkörper 3 definiert. Besonders vorteilhaft ist jedoch, und das gilt für alle Ausführungsbeispiele der hier beschriebenen Werkzeuge, dass die Wirkrichtung der Stelleinrichtung für die Schneidplatte, also der Stellschraube und eines möglicherweise vorgesehenen Stellkeils, beziehungsweise die Funktionsflächen an der Schneidplatte für die Justierung völlig unabhängig sind von der Anlagefläche am Grundkörper, die die Verjüngung bestimmt.

Anhand von Figur 11 wurde die Ausnehmung 69 für die Schneidplatte 13 beschrieben. Dabei gilt, dass die Schneidplatte 13 vollflächig an der Bodenfläche 71 anliegt und dass durch diese Anlage die Verjüngung, also der Abfall der Nebenschneide der Schneidplatte 13 bestimmt wird. Die radiale Einstellung der Schneidplatte erfolgt über die Stellschraube 83 und einem möglicherweise vorgesehenen Stellkeil, der durch die Ausnehmung 79 in der Anlagefläche 77 auf die Schneidplatte 13 wirkt. Diese wird also bei der Justierung des Radiusses des Werkzeugs 1 parallel zur Bodenfläche 71 verschoben, sodass sich die Verjüngung nicht verändert.

Gerade für Feinbearbeitungswerkzeuge, also bei einem Werkzeug gemäß Figur 1 beziehungsweise gemäß Figur 10, ist es vorteilhaft, eine Verjüngung von 1 µm/mm zu erreichen.

Bei Werkzeugen der hier beschriebenen Art können relativ dicke Schneidplatten eingesetzt werden, sodass sich optimale Werte der Nebenschneidenlänge und auch Doppelanschnitte erzielen lassen, das heißt, eine in Richtung der durch den Pfeil 27 angedeuteten Vorschubrichtung gesehen, kann die Hauptschneide 29 unter verschiedenen Winkeln abfallende Bereiche aufweisen, die Späne von der zu bearbeitenden Bohrungswand abtragen.

## Patentansprüche

1. Werkzeug zur spanenden Bearbeitung von Bohrungsoberflächen mit
- einem Grundkörper (3),
- einer Schneideinrichtung, die wenigstens eine Schneidplatte (13) mit mindestens einer geometrisch definierten Schneide (19;19') aufweist,
- wobei die wenigstens eine schneidplatte (13) an der Stirnfläche (5) des Werkzeugs (1) tangential befestigt, vorzugsweise in diese eingelassen ist, und mit
- mindestens einer Führungsfläche zur Führung des Werkzeugs (1) in der bearbeiteten Bohrung, wobei
- die mindestens eine Schneidplatte (13) mit einem Bogenschliff versehen ist, durch den eine an die Schneide angrenzende Stützfläche (35) geschaffen wird, die unter einem Radius gewölbt ist, der kleiner ist als der Radius der zu bearbeitenden Bohrung, wobei der unmittelbar an die Schneide angrenzende Bereich der Stützfläche an der zu bearbeitenden Wand der Bohrung anliegt und der - in Umfangsrichtung des Werkzeugs gesehen - in einem Abstand zur Schneide liegende Endbereich der Stützfläche in einem Abstand zur Wand der Bohrung liegt,
**dadurch gekennzeichnet, dass**
die Stützfläche (35) einen Endbereich aufweist, der über einen Knick (53) in eine freie Fläche (37) übergeht, die steiler abfällt als der Endbereich (51) der Stützfläche (35), wobei der Abstand (dₐ; d_{b}; d_{c}; d_{d}) zwischen dem Endbereich (51) der Stützfläche zu der Wand der Bohrung im Bereich von 0,02 mm bis 0,001 mm, insbesondere von 0,01 mm bis 0,003 mm liegt, vorzugsweise ≤ 0,005 mm beträgt.

2. Werkzeug nach Anspruch 1, **dadurch gekennzeichnet, dass** die mindestens eine Führungsfläche durch eine Führungsleiste (F1, F2, F3) oder durch eine weitere Schneidplatte (13) gebildet wird, die mit einem Bogenschliff versehen ist, durch den eine als Führungsfläche dienende Stützfläche geschaffen wird, die unter einem Radius gewölbt ist, der kleiner ist, als der Radius der zu bearbeitenden Bohrung, wobei der unmittelbar an die Schneide angrenzende Bereich der Stützfläche an der zu bearbeitenden Wand der Bohrung anliegt und der - in Umfangsrichtung des Werkzeugs (1) gesehene - in einem Abstand zur Schneide liegende Endbereich der Stützfläche in einem Abstand zur Wand der Bohrung liegt.

3. Werkzeug nach Anspruch 1 oder 2, **dadurch gekennzeichnet, dass** das Werkzeug eine Schneidplatte (13) und zwei Führungsleisten (F1,F2) umfasst oder eine Schneidplatte und mindestens zwei weitere Schneidplatten aufweist, wobei alle Schneidplatten mit einem Bogenschliff versehen sind.

4. Werkzeug nach einem der vorhergehenden Ansprüche, **dadurch gekennzeichnet, dass** die Schneidplatte (13) als Schlicht- oder Schruppschneidplatte ausgebildet ist.

5. Werkzeug nach einem der vorhergehenden Ansprüche, **dadurch gekennzeichnet, dass** die Schneidplatte (13) - in Draufsicht gesehen - mehreckig ist.

6. Werkzeug nach einem der vorhergehenden Ansprüche, **dadurch gekennzeichnet, dass** die Schneidplatte (13) rhombisch ausgebildet ist.

7. Werkzeug nach einem der vorhergehenden Ansprüche, **dadurch gekennzeichnet, dass** die Schneidplatte (13) im Wesentlichen dreieckförmig ausgebildet ist.

8. Werkzeug nach Anspruch 7, **dadurch gekennzeichnet, dass** die Seitenkanten der Schneidplatte (13) einen abknickenden Verlauf aufweisen.

9. Werkzeug nach einem der vorhergehenden Ansprüche, **dadurch gekennzeichnet, dass** die Schneidplatte (13) dreh- und/oder wendbar ist.

10. Werkzeug nach einem der vorhergehenden Ansprüche, **dadurch gekennzeichnet, dass** die Schneidplatte (13) gegenüber einer gedachten Ebene, auf der die Mittelachse (7) des Werkzeugs (1) senkrecht steht, um mindestens eine, vorzugsweise um zwei Achsen geneigt ist.

11. Werkzeug nach einem der vorhergehenden Ansprüche, **dadurch gekennzeichnet, dass** die Schneidplatte (13) eine Hauptschneide (29) und eine Nebenschneide (31) aufweist und dass die Stützfläche (35) vorzugsweise der Nebenschneide (31) zugeordnet ist.

12. Werkzeug nach einem der vorhergehenden Ansprüche, **dadurch gekennzeichnet, dass** der Radius des Bogenschliffs im Bereich der Stützfläche (35) 30 mm und die Breite der Stützfläche 0,8 mm bei Werkzeugen beträgt, mit denen Bohrungen mit einem Durchmesser von 60 mm bis 120 mm bearbeitet werden.

13. Werkzeug nach einem der vorhergehenden Ansprüche, **dadurch gekennzeichnet, dass** der Radius des Bogenschliffs im Bereich der Stützfläche (35) 60 mm und die Breite der Stützfläche 1,2 mm bei Werkzeugen beträgt, mit denen Bohrungen mit einem Durchmesser von 121 mm bis 180 mm bearbeitet werden.

14. Werkzeug nach einem der vorhergehenden Ansprüche, **dadurch gekennzeichnet, dass** der Radius des Bogenschliffs im Bereich der Stützfläche (35) 90 mm und die Breite der Stützfläche 1,6 mm bei Werkzeugen beträgt, mit denen Bohrungen mit einem Durchmesser von 181 mm bis 250 mm bearbeitet werden.

## Claims

1. Tool for machining bore surfaces, comprising
- a base body (3),
- a cutting device having at least one cutting die (13) with at least one geometrically defined cutting edge (19; 19'),
- the at least one cutting die (13) being tangentially fastened to the end face (5) of the tool (1), preferably embedded therein, and
- at least one guide surface for guiding the tool (1) inside the machined bore, wherein
- the at least one cutting die (13) is provided with a rounded cut by means of which a support surface (35) adjacent to the tool edge is produced, the support surface being arched with a radius that is smaller than the radius of the bore to be machined, and the region of the support surface directly adjoining the tool edge resting against the bore wall to be machined, and the end region of the support surface - viewed in the peripheral direction of the tool - which is situated at a distance from the tool edge being situated at a distance from the wall of the bore,
**characterized in that**
the support surface (35) has an end region which merges into a free surface (37) via a bend (53), the free surface having a steeper slope than the end region (51) of the support surface (35), and the distance (dₐ; d_{b}; d_{c}; d_{d}) between the end region (51) of the support surface from the wall of the bore is in a range of 0.02 mm to 0.001 mm, in particular 0.01 mm to 0.003 mm, preferably ≤ 0.005 mm.

2. Tool according to claim 1, **characterized in that** the at least one guide surface is formed by a guide bar (F1, F2, F3) or by another cutting die (13) which is provided with a rounded cut by means of which a support surface which acts as a guide surface is produced, the support surface being arched with a radius that is smaller than the radius of the bore to be machined, and the region of the support surface directly adjoining the tool edge resting against the bore wall to be machined, and the end region of the support surface - viewed in the peripheral direction of the tool (1) - which is situated at a distance from the tool edge being situated at a distance from the wall of the bore.

3. Tool according to claim 1 or 2, **characterized in that** the tool comprises one cutting die (13) and two guide bars (F1, F2), or one cutting die and at least two additional cutting dies, all the cutting dies being provided with a rounded cut.

4. Tool according to one of the preceding claims, **characterized in that** the cutting die (13) is designed as a finishing cutting die or a rough machining cutting die.

5. Tool according to one of the preceding claims, **characterized in that** the cutting die (13) has a polygonal design as viewed from the top.

6. Tool according to one of the preceding claims, **characterized in that** the cutting die (13) has a rhombic design.

7. Tool according to one of the preceding claims, **characterized in that** the cutting die (13) has an essentially triangular design.

8. Tool according to claim 7, **characterized in that** the side edges of the cutting die (13) have a bent progression.

9. Tool according to one of the preceding claims, **characterized in that** the cutting die (13) may be rotated and/or turned.

10. Tool according to one of the preceding claims, **characterized in that** the cutting die (13) is inclined about at least one, preferably two, axes with respect to an imaginary plane that is perpendicular to the center axis (7) of the tool (1).

11. Tool according to one of the preceding claims, **characterized in that** the cutting die (13) has a primary tool edge (29) and a secondary tool edge (31), and the support surface (35) is preferably associated with the secondary tool edge (31).

12. Tool according to one of the preceding claims, **characterized in that** the radius of the rounded cut in the region of the support surface (35) is 30 mm, and the width of the support surface is 0.8 mm for tools by means of which bores having a diameter of 60 mm to 120 mm are machined.

13. Tool according to one of the preceding claims, **characterized in that** the radius of the rounded cut in the region of the support surface (35) is 60 mm, and the width of the support surface is 1.2 mm for tools by means of which bores having a diameter of 121 mm to 180 mm are machined.

14. Tool according to one of the preceding claims, **characterized in that** the radius of the rounded cut in the region of the support surface (35) is 90 mm, and the width of the support surface is 1.6 mm for tools by means of which bores having a diameter of 181 mm to 250 mm are machined.

## Revendications

1. Outil pour l'usinage de surfaces d'alésages par enlèvement de copeaux, comprenant
- un corps de base (3),
- un dispositif de coupe qui présente au moins une plaquette de coupe (13) avec au moins un tranchant (19, 19') défini géométriquement,
- la au moins une plaquette de coupe (13) étant fixée tangentiellement sur la surface frontale (5) de l'outil (1), de préférence encastrée dans celle-ci et
- au moins une surface de guidage destinée à guider l'outil (1) dans l'alésage usiné,
- la au moins une plaquette de coupe (13) étant pourvue d'une surface rectifiée courbe par laquelle est créée une surface d'appui (35) contigüe au tranchant, qui est bombée avec un rayon inférieur au rayon de l'alésage à usiner, la zone de la surface d'appui immédiatement contigüe au tranchant étant attenante à la paroi à usiner de l'alésage et la zone d'extrémité de la surface d'appui située à distance du tranchant, quand on regarde dans la direction circonférentielle de l'outil, étant située à distance de la paroi de l'alésage,
**caractérisé en ce que**
la surface d'appui (35) présente une zone d'extrémité qui passe par un coude (53) à une surface libre (37) qui descend plus fortement que la zone d'extrémité (51) de la surface d'appui (35), l'écart (dₐ ; d_{b} ; d_{c} ; d_{d}) entre la zone d'extrémité (51) de la surface d'appui et la paroi de l'alésage étant situé dans la plage allant de 0,02 mm à 0,001 mm, en particulier de 0,01 mm à 0,003 mm, de préférence ≤ 0,005 mm.

2. Outil selon la revendication 1, **caractérisé en ce que** la au moins une surface de guidage est formée par une baguette de guidage (F1, F2, F3) ou par une autre plaquette de coupe (13) qui est pourvue d'une surface rectifiée courbe par laquelle est créée une surface d'appui servant de surface de guidage, qui est bombée avec un rayon inférieur au rayon de l'alésage à usiner, la zone de la surface d'appui immédiatement contigüe au tranchant étant attenante à la paroi à usiner de l'alésage et la zone d'extrémité de la surface d'appui située à distance du tranchant, quand on regarde dans la direction circonférentielle de l'outil (1), étant située à distance de la paroi de l'alésage.

3. Outil selon la revendication 1 ou 2, **caractérisé en ce que** l'outil comprend une plaquette de coupe (13) et deux baguettes de guidage (F1, F2) ou présente une plaquette de coupe et au moins deux autres plaquettes de coupe, toutes les plaquettes de coupe étant pourvues d'une surface rectifiée courbe.

4. Outil selon l'une des revendications précédentes, **caractérisé en ce que** la plaquette de coupe (13) est réalisée sous la forme de plaquette de coupe finisseuse ou dégrossisseuse.

5. Outil selon l'une des revendications précédentes, **caractérisé en ce que** la plaquette de coupe (13), dans une vue de dessus, est polygonale.

6. Outil selon l'une des revendications précédentes, **caractérisé en ce que** la plaquette de coupe (13) est de forme rhombique.

7. Outil selon l'une des revendications précédentes, **caractérisé en ce que** la plaquette de coupe (13) est de forme essentiellement triangulaire.

8. Outil selon la revendication 7, **caractérisé en ce que** les arêtes latérales de la plaquette de coupe (13) présentent un tracé coudé.

9. Outil selon l'une des revendications précédentes, **caractérisé en ce que** la plaquette de coupe (13) peut être tournée et/ou retournée.

10. Outil selon l'une des revendications précédentes, **caractérisé en ce que** la plaquette de coupe (13) est inclinée autour d'au moins un axe, de préférence autour de deux axes, par rapport à un plan imaginaire auquel l'axe médian (7) de l'outil (1) est perpendiculaire.

11. Outil selon l'une des revendications précédentes, **caractérisé en ce que** la plaquette de coupe (13) présente un tranchant principal (29) et un tranchant secondaire (31) et **en ce que** la surface d'appui (35) est associée de préférence au tranchant secondaire (31).

12. Outil selon l'une des revendications précédentes, **caractérisé en ce que** le rayon de la surface rectifiée courbe dans la zone de la surface d'appui (35) est de 30 mm et la largeur de la surface d'appui est de 0,8 mm pour les outils avec lesquels sont usinés des alésages d'un diamètre allant de 60 mm à 120 mm.

13. Outil selon l'une des revendications précédentes, **caractérisé en ce que** le rayon de la surface rectifiée courbe dans la zone de la surface d'appui (35) est de 60 mm et la largeur de la surface d'appui est de 1,2 mm pour les outils avec lesquels sont usinés des alésages d'un diamètre allant de 121 mm à 180 mm.

14. Outil selon l'une des revendications précédentes, **caractérisé en ce que** le rayon de la surface rectifiée courbe dans la zone de la surface d'appui (35) est de 90 mm et la largeur de la surface d'appui est de 1,6 mm pour les outils avec lesquels sont usinés des alésages d'un diamètre allant de 181 mm à 250 mm.
